# EUROPEAN PATENT SPECIFICATION

(11) **EP 3 211 031 B1**
(45) Date of publication and mention of the grant of the patent: **05.06.2019**
(21) Application number: 15851720.1
(22) Date of filing: 07.09.2015
(51) Int. Cl.: C08L 23/00, C08L 1/02

(54) **POLYOLEFIN RESIN COMPOSITION**
POLYOLEFINHARZZUSAMMENSETZUNG
COMPOSITION DE RÉSINE POLYOLÉFINE

(30) Priority: 20.10.2014 JP 2014213467
(43) Date of publication of application: 30.08.2017
(73) Proprietor: Chuetsu-Pulp And Paper Co. Ltd., Takaoka-shi, Toyama 933-8533 (JP)
(72) Inventor: NODERA, Akio, Sodegaura-shi Chiba 299-0205 (JP); HASHIBA, Hiromi, Takaoka-shi Toyama 933-8533 (JP); TANAKA, Hiroyuki, Takaoka-shi Toyama 933-8533 (JP)
(74) Representative: Murgitroyd & Company
(86) International application number: PCT/JP2015/075280
(87) International publication number: WO 2016/063643

(56) References cited:
- JP-A- 2011 056 456
- JP-A- 2011 202 010
- JP-A- 2012 102 324
- JP-A- 2012 111 855
- JP-A- 2012 201 767
- JP-A- 2013 166 818
- SHUJI FUJISAWA ET AL: "Comparison of mechanical reinforcement effects of surface-modified cellulose nanofibrils and carbon nanotubes in PLLA composites", COMPOSITES SCIENCE AND TECHNOLOGY, vol. 90, 1 January 2014 (2014-01-01), pages 96-101, XP055463329, AMSTERDAM, NL ISSN: 0266-3538, DOI: 10.1016/j.compscitech.2013.10.021
- JOHN Z. LU ET AL: "Wood-fiber/high-density-polyethylene composites: Coupling agent performance", JOURNAL OF APPLIED POLYMER SCIENCE, vol. 96, no. 1, 1 January 2005 (2005-01-01), pages 93-102, XP055463331, ISSN: 0021-8995, DOI: 10.1002/app.21410
- LJUNGBERG N ET AL: "Nanocomposites of isotactic polypropylene reinforced with rod-like cellulose whiskers", POLYMER, ELSEVIER SCIENCE PUBLISHERS B.V, GB, vol. 47, no. 18, 23 August 2006 (2006-08-23), pages 6285-6292, XP028060644, ISSN: 0032-3861, DOI: 10.1016/J.POLYMER.2006.07.013 [retrieved on 2006-08-23]

## Description

### [Technical Field]

The present invention relates to a polyolefin resin composition which has excellent environmental characteristics by virtue of use of a biomass material, and which is capable of yielding a molded product that is less susceptible to lowering of impact strength and that has a low specific gravity and yet exhibits a high stiffness and that has an excellent appearance.

### [Background Art]

In recent years, biomass materials have attracted attention from the viewpoint of environmental protection. As materials for applications in automotive, office automation, and electrical and electronic fields, composite materials with a naturally-derived organic filler, with a biopolymer and the like have become employed. Further, with a view to improving mechanical strength such as stiffness, and heat resistance, it has been examined to incorporate an inorganic filler such as glass fibers into a resin, as a component of a resin composition. However, such an inorganic filler is required to be incorporated in a large amount in order to attain the above purpose, and this gives rise to problems that a molded product has an increased specific gravity and that residual rubbish resulting from incineration or disposal is increased and places a load on the environment.

Patent Document 1 discloses such a technique that with the aim of obtaining a resin composition which is capable of yielding a molded product having excellent mechanical properties and flame retardance by incorporating an aliphatic polyester and a naturally-derived organic filler into an aromatic polycarbonate resin, jute fibers or rayon fibers as the naturally-derived organic filler are used to obtain a composite material with the resin composition. However, the resin composition obtained in Patent Document 1 has drawbacks that it is insufficient in thermal stability at the time of molding, and that a molded product made thereof has a considerably lowered impact strength and unsatisfactory appearance, and that a molded product made thereof is susceptible to perceptible undesired color development.

Patent Document 2 discloses a polycarbonate resin composition comprising: 100 parts by weight of a resin mixture of (A) 99-60 % by weight of a polycarbonate resin and (B) 1-40 % by weight of cellulose fibers having an average fiber diameter of 5-50 *µ* m and an average fiber length of 0.03-1.5 mm, and (C) 0.2-30 parts by weight of a terpenic compound, which polycarbonate resin composition has excellent environmental characteristics by virtue of use of a biomass material, and which is capable of yielding a molded product that has a low specific gravity and yet exhibits a high stiffness and that has an excellent appearance and good thermal stability and is imparted with flame retardance. However, although the molded product made of the resin composition in each of the resin compositions in almost all Examples in Patent Document 2 has a relatively low specific gravity, the specific gravity (g/cm³) is 1.20 or more which is greater than that of water. Accordingly, the resin composition does not adequately meet the challenge of weight saving in constituent members of automobiles, OA appliances, electrical and electronic appliances, or the like.

Patent Document 3 discloses a technique for preparing a composition which comprises cellulose and a dispersant having a resin-affinitive segment A and a cellulose-affinitive segment B and which has a block copolymer structure or a gradient copolymer structure. However, when an olefinic resin is blended with the composition, a maleic anhydride-modified resin is also blended in combination. If the olefinic resin is blended alone with the composition, the olefinic resin cannot be dispersed satisfactorily in the composition and a number of agglomerates having a size of 10 *µ*m are formed. Further, as the cellulose, chemically modified cellulose is used and chemically unmodified cellulose cannot suitably be used. Moreover, since a terpenic resin is not used, a molded product made thereof has an improved modulus of elasticity but has a remarkably lowered impact strength in terms of strength level.

Patent Document 4 discloses a technique for preparing a hydrophilic nanofiber composite which is prepared by mixing hydrophilic nanofibers having their hydroxyl groups solvated with a hydrophilic organic solvent with a molten plastic. However, the hydroxyl groups are required to be solvent-substituted by solvating the hydroxyl groups with a lower aliphatic alcohol, and nanofibers in a water-retaining condition as such cannot be used. Further, since no terpenic resin is used in the composite, a molded product made thereof has a remarkably lowered impact strength in terms of strength level.

Patent Document 5 discloses a dispersion comprising cellulose nanofibers and a resin which are uniformly dispersed in a dispersion medium, and a resin composition comprising a resin and cellulose nanofibers uniformly dispersed in the resin. However, a number of *µ*m-level size agglomerates are present therein. Further, the cellulose nanofibers are prepared by means of a bead mill and thereby undergo lowering of polymerization degree. Moreover, a maleic anhydride-modified resin is also used in combination. Furthermore, no terpenic resin is used. a molded product made thereof has an improved modulus of elasticity but has a remarkably lowered impact strength in terms of strength level

### [Prior Art Documents]

### [Patent Documents]

Patent Document 1: Japanese Unexamined Patent Publication No. 2010-215791
Patent Document 2: International Publication No. WO/2013/133228
Patent Document 3: Japanese Unexamined Patent Publication No. 2014-162880
Patent Document 4: Japanese Unexamined Patent Publication No. 2013-170241
Patent Document 5: Japanese Unexamined Patent Publication No. 2013-166818

### [Summary of the Invention]

### [Problem to be Solved by the Invention]

In view of the above-described problems in the conventional techniques, it is an object of the present invention to provide a polyolefin resin composition which has excellent environmental characteristics by virtue of use of a biomass material, which is capable of yielding a molded product that is less susceptible to lowering of impact strength and that has a low specific gravity and yet exhibits a high stiffness and that has an excellent appearance.

The present inventors have made intensive and extensive researches, and as a result, they have found that when cellulose nanofibers having a specific average fiber diameter and a specific average fiber length as a biomass material are incorporated together with a terpenic compound into a polyolefin resin in a specific amount, the above problems are thereby solved.

### [Means to Solve the Problem]

In other words, the present invention relates to the following polyolefin resin composition.
1. A polyolefin resin composition comprising: 100 parts by weight of a resin mixture of (A) 1-60 % by weight of cellulose nanofibers obtained by fibrillating polysaccharide with a high pressure water or aqueous jet and having an average thickness of 10-200 nm and (B) 99-40 % by weight of a polyolefin resin, and (C) 0.2-30 parts by weight of a terpene phenolic compound.
2. The polyolefin resin composition given in the item 1, wherein (A) the polysaccharide is pulp having an *α*-cellulose content of 60-99 % by weight.
3. The polyolefin resin composition given in the item 1 or 2, wherein (A) the cellulose nanofibers have been prepared by causing a jet of a high pressure water or aqueous about 50-400 MPa to collide against a 0.5-10 % by weight aqueous slurry of the polysaccharide.
4. The polyolefin resin composition given in any one of the items 1 to 3, wherein (A) the aqueous dispersion of the cellulose nanofibers has a solid content concentration of 20% or more.
5. The polyolefin resin composition given in any one of the items 1 to 4, wherein (C) the terpenic compound is a terpene phenolic compound having a hydroxyl value of 50-150.

### [Brief Description of Drawings]

Fig.1 is a conceptual view of one form of a device for preparing cellulose nanofibers as the component (A) of the polyolefin resin composition according to the present invention;
Fig.2 is a conceptual view showing a part of the device for preparing cellulose nanofibers, which is shown in Fig.1, in an enlarged scale;
Fig.3 is a conceptual view of another form of a device for preparing cellulose nanofibers as the component (A) of the polyolefin resin composition according to the present invention; and
Fig.4 is a conceptual view of still another form of a device for preparing cellulose nanofibers as the component (A) of the polyolefin resin composition according to the present invention.

### [Mode for Carrying Out the Invention]

### [(A) Cellulose Nanofibers]

In the present invention, cellulose nanofibers having a specific average fiber diameter and a specific average fiber length are used as a biomass material, and agglomeration of cellulose fibers is thereby inhibited. This leads to inhibition of lowering in impact strength. Further, the (A) cellulose nanofibers have a low specific gravity as compared with inorganic fibers such as glass fibers and yet are capable of improving stiffness of a molded product, enabling a resin composition to be obtained which is capable of yielding a molded product having high stiffness and a low specific gravity. As the cellulose nanofibers, there may be mentioned, for example, those derived from a polysaccharide including natural plant fibers such as wood fibers, bamboo fibers, sugarcane fibers, seed hair fibers, leaf fibers and the like. These cellulose nanofibers may be used alone or in combination. As the polysaccharide, it is preferred to use pulp having an *α*-cellulose content of 60-99 % by weight. When the pulp has such a purity that its *α*-cellulose content is 60 % by weight or more, fiber diameter and fiber length are easy to regulate, and this enables inhibition of entanglement of fibers with each other. Further, as compared with a case where pulp having an *α*-cellulose content less than 60 % by weight is used, the resin composition exhibits higher thermal stability at the time of melting and thus no substantial lowering in impact strength of a molded product made of the resin composition is caused. In addition, the resin composition has excellent effect in inhibition of undesired color development. These render the effect of the present invention more excellent. On the other hand, if pulp having an *α*-cellulose content of more than 99 % by weight is used, it is difficult to fibrillate fibers to a nano-level.

The cellulose nanofibers in the present invention have an average thickness of 10-200 nm and prepared by fibrillating polysaccharide with a high-pressure water or aqueous jet.

The average thickness was measured by means of a field emission scanning electron microscope JSM-7001FTTLS manufactured by Japan Electron Optics Laboratory Co., Ltd.

Since the polysaccharide is fibrillated to a level of 10-200 nm in average thickness, the slurry thereby exhibits sufficient flowability and thus causes no substantial lowering of impact strength. This enables a resin composition to be obtained which is capable of yielding a molded product that has a low specific gravity and yet high stiffness and that is excellent in appearance.

If the cellulose nanofibers have an average thickness less than 10 nm, water drainage becomes poor, and undesirably, it is thus difficult to increase solid content.

If the cellulose nanofibers have an average thickness exceeding 200 nm, the slurry contains fibers having thicknesses of several tens *µ*m which have not been fibrillated to a sufficient degree. The slurry has considerably lowered flowability and dispersion of the cellulose fibers is poor. This is undesirable.

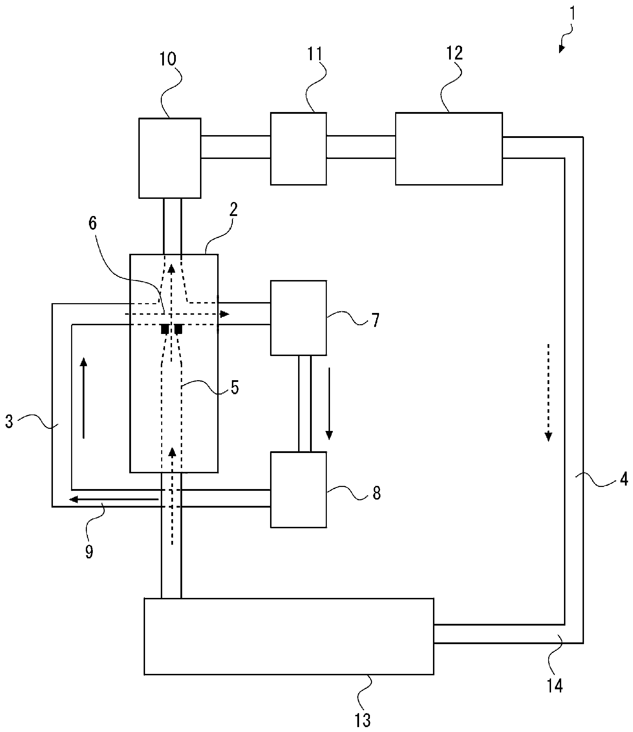

The fibrillation of polysaccharide by means of a high-pressure water or aqueous jet is carried out in such a manner that a high-pressure water or aqueous jet of about 50-400 MPa is caused to collide against a 0.5-10 % by weight aqueous slurry of the polysaccharide. This is effected using, for example, a device 1 for preparing cellulose nanofibers shown in Fig. 1. The device 1 for preparing cellulose nanofibers comprises a single chamber 2, a polysaccharide slurry supply path 3 as a first fluid medium supply path which is so disposed as to be capable of supplying a polysaccharide slurry to the single chamber 2, and a second fluid medium supply path 4 which permits water or an originally polysaccharide-free slurry to circulate therein via the single chamber 2. In the single chamber 2, an orifice injection part 5 is provided for orifice-injecting the originally polysaccharide-free slurry in the second fluid medium supply path 4 in a direction intersecting the direction of the polysaccharide slurry supply from the polysaccharide slurry supply path 3. The polysaccharide slurry supply path 3 permits the polysaccharide slurry to be circulated via chamber 2.

The polysaccharide slurry supply path 3 and the second fluid medium supply path 4 have a mutual intersection 6 in the single chamber 2.

The polysaccharide slurry supply path 3 functions as a polysaccharide supply section and comprises a tank 7 for impounding the polysaccharide slurry and a pump 8 which are disposed in a circulation path 9. On the other hand, the second fluid medium supply path 4 functions as a circulation path and comprises a tank 10, a pump 11, a heat exchanger 12, and a plunger 13, which are disposed therein.

The originally polysaccharide-free slurry comprehensively means water or a slurry containing nano-fragmented polysaccharide in a concentration which increases according to the degree of progress of the operation of the device 1 for preparing cellulose nanofibers in such a manner that initially water is contained in a tank 10 and the water is then caused to pass through the mutual intersection 6 and to return into the tank 10 repeatedly, and consequently, develops into a slurry containing nano-fragmented polysaccharide in such an increasing concentration.

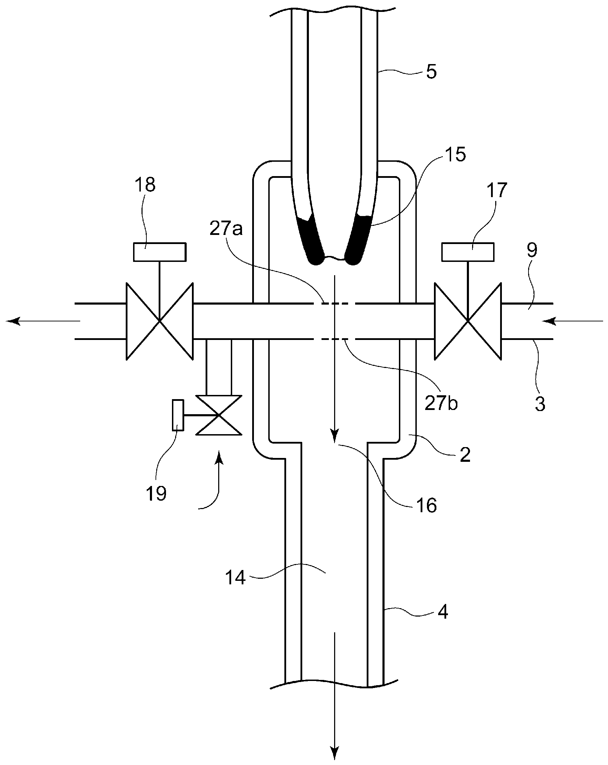

As shown in Fig.2, the circulation path 9 of the polysaccharide slurry supply path 3 is so disposed as to pass through the camber 2, and an orifice injection opening 14 of an orifice injection part 5 connected to the plunger 13 in the second fluid medium supply path 4 is set to open in the chamber 2 so as to permit the originally polysaccharide-free slurry to pass across the circulation path 9 in a direction intersecting the circulation path 9. An outlet 15 of the chamber 2 is provided at the position opposite to the orifice injection opening 14 in the chamber 2, and the circulation path of the second fluid medium supply path 4 is connected to the outlet 15 of the chamber 2 to constitute the second fluid medium supply path 4.

On the other hand, the circulation path 9 of the polysaccharide supply path 3 is formed using, for example, a vinyl hose, a rubber hose or the like. On the entry side of the circulation path 9 to the chamber 2, a one-way valve 16 is provided which opens only in the direction toward the chamber 2. On the exit side of the circulation path 9 from the chamber 2, a one-way valve 17 is provided which opens only in the discharge direction from the chamber 2. In addition, between the chamber 2 and the one-way valve 17, the circulation path 9 is provided with an air intake valve 18. The air intake valve 18 opens only in the direction of air intake from the outside of the circulation path 9.

By means of the above-described device for preparing cellulose nanofibers, cellulose nanofibers are prepared in the following manner.

The originally polysaccharide-free slurry is circulated through the second fluid medium supply path 4 via the chamber 2. Specifically, using the pump 11, the originally polysaccharide-free slurry in the tank 10 is caused to pass through the heat exchanger 12 and the plunger 13 and thereby circulated in the second fluid medium supply path 4. On the other hand, the polysaccharide slurry is circulated in the polysaccharide supply path 3 via the chamber 2. Specifically, using the pump 8, the polysaccharide slurry in the tank 7 is circulated in the circulation path 9 which is formed using a vinyl hose, a rubber hose or the like.

On the basis of this, the originally polysaccharide-free slurry circulated in the second fluid medium supply path 4 is orifice-injected against the polysaccharide slurry circulated in the polysaccharide slurry supply path 3 through the chamber 2. Specifically, high pressure water or aqueous slurry, i.e., highly pressurized originally polysaccharide-free slurry is supplied from the plunger 13 to the orifice injection opening 14 connected to the plunger 13, and the high pressure water or aqueous slurry is orifice-jetted at a high pressure of about 50-400 MPa from the orifice injection opening 14 toward the circulation path 9.

In consequence, the originally polysaccharide-free slurry passes across, in a direction intersecting the circulation path 9, the inside of the circulation path 9 via a through-hole defined by holes 26a, 26b preliminarily provided in the circulation path 9 which is formed using, for example, a vinyl hose, a rubber hose or the like, while entraining a part of the polysaccharide slurry circulating in the circulation path 9. The originally polysaccharide-free slurry which has passed across the circulation path 9 rushes toward the outlet 15 of the chamber 2 and enters the second fluid medium supply path 4. The originally polysaccharide-free slurry is thereby re-circulated in the second fluid medium supply path 4.

As the above process is repeated, fibrillation of the polysaccharide gradually progresses which is present in the polysaccharide slurry circulated in the polysaccharide slurry supply path 3 through the chamber 2 and in the originally polysaccharide-free slurry circulated in the second fluid medium supply path 4. Accordingly, cellulose nanofibers having a fibrillation degree suitable for applications and high uniformity can be obtained.

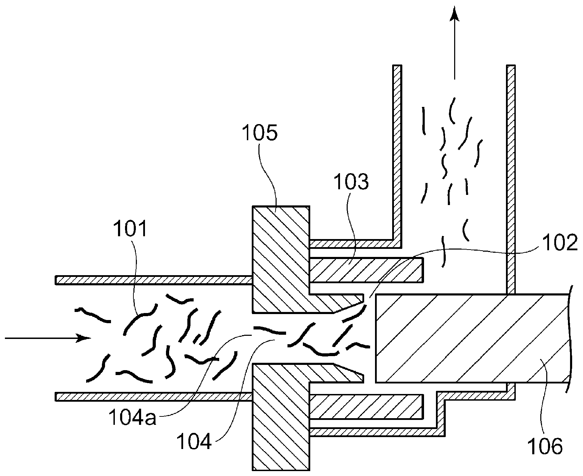

As another method for fibrillating polysaccharide with a high pressure water jet into cellulose nanofibers, there may be mentioned a homogenizing treatment method described in Japanese Unexamined Patent Publication No. 2012-36518, in which a dispersion comprising starting material fibers dispersed in a solvent is treated by means of a homogenizer equipped with a crushing type homovalve sheet. According to the homogenizing treatment method, as shown in Fig.3, starting material fibers 101 pressure-fed in such a homogenizer under high pressure are forced to pass through a small diameter orifice 102 in the form of a narrow aperture and to collide against a wall surface of the small diameter orifice 102 (in particular, a wall surface of an impact ring 103) and are thereby cleaved under shearing stress or cleaving action. Thus, micro-fibrillation is effected to obtain micro-fibrils having substantially uniform fiber diameters.

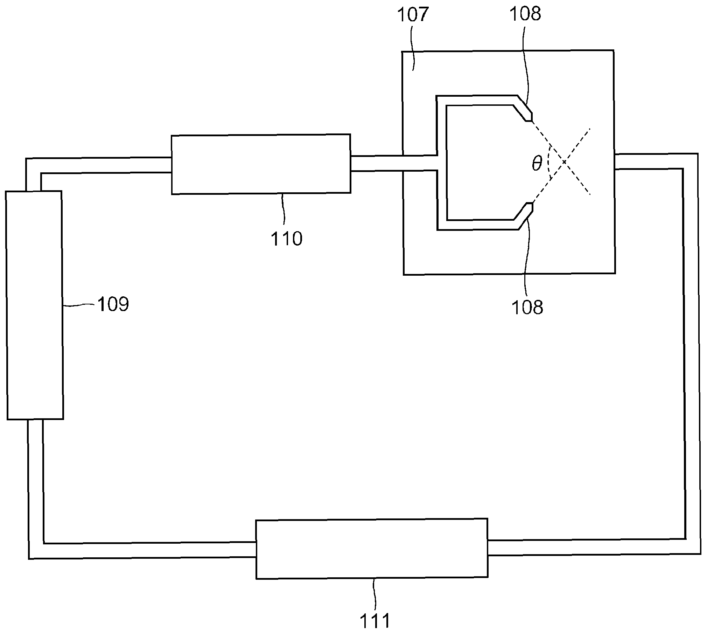

As a further method for fibrillating polysaccharide with a high pressure water jet into cellulose nanofiber, there may be mentioned an aqueous counter collision method disclosed in Japanese Unexamined Patent Publication No. 2005-270891. In this method, natural cellulose fibers suspended in water are introduced into opposing two nozzles (Fig.4: 108a, 108b) in a chamber (Fig.4: 107) and jetted from these nozzles toward one point and thereby caused to collide (see Fig.4). With this method, jets of an aqueous suspension of natural microcrystalline cellulose fibers (for example, Funacell manufactured by Funakoshi Co., Japan) are counter-collided to nano-fibrillate and thereby strip off surfaces of the fibers. This improves affinity of the fibers for water as a carrier and thereby enables the nano-fibrillated fibers to be finally brought to a nearly dissolved state. The device shown in Fig.4 is of a liquid circulation type and comprises a tank (Fig.4: 109), a plunger (Fig.4: 110), opposing two nozzles (Fig.4: 108a, 108b) and, if desired, a heat exchanger (Fig.4: 111). In the device, fine particles dispersed in water are introduced into the opposing two nozzles and jetted from the opposing nozzles (Fig.4: 108a, 108b) under high pressure to cause the fine particles to counter collide in water. In this method, only water is used other than natural cellulose fibers, and nano-fibrillation is effected by cleaving only interaction between the fibers, and hence no substantial structural change of cellulose molecules is caused. Accordingly, it is possible to obtain cellulose nanofibers with lowering of polymerization degree of cellulose associated with the cleavage minimized.

When the thus obtained cellulose nanofibers are so dispersed in water that the resulting aqueous dispersion of cellulose nanofibers has a solid content concentration of 20 % or more, compatibility with a dispersant is improved and formation of aggregates is thereby unlikely to occur. Accordingly, the cellulose nanofibers in such a condition are efficiently dispersed in a polyolefin resin. If the solid concentration is less than 20 %, compatibility with a dispersant, which has a hydrophobic site in its structure, is poor, the cellulose nanofibers are likely to together form aggregates. The aggregates cause impairment of dispersibility in a polyolefin resin. Further, decrease in temperature of the resin in kneading results in non-uniform shearing force in the kneading, and accordingly, this undesirably causes difficulty in uniform dispersion in the kneading process. Moreover, increase in temperature of a kneading device is inhibited to lead to loss of heat energy.

In a resin mixture of (A) cellulose nanofibers and (B) a polyolefin resin, contents of the component (A) and the component (B) are 1-60 % by weight and 99-40 % by weight, respectively. If the content of the component (A) is less than 1 % by weight, improvement in mechanical properties such as modulus of elasticity or the like is insufficient. On the other hand, if the content of the component (A) exceeds 60 % by weight, mechanical properties such as impact strength or the like are greatly lowered. The content of the component (A) in the resin mixture is preferably 2-30 % by weight, more preferably 3-25 % by weight.

### [(B) Polyolefin Resin]

(B) A polyolefin resin in the present invention is a main component of the composite resin composition of the present invention, which imparts improved mechanical properties such as stiffness, impact resistance and the like to a molded product obtained by molding the composite resin composition of the present invention, and which imparts improved properties such as moldability, solvent resistance, heat resistance and the like to the composite resin composition of the present invention.

Such a polyolefin resin is one obtained by homopolymerizing or copolymerizing one or more kinds of monomers selected from C2-C6 *α*-olefins in terms of exhibition of the improved properties.

However, *α*-olefins containing 7 or more carbon atoms may be used as comonomers, provided that use of such *α*-olefins does not inhibit the exhibition of the improved properties.

As the polyolefin resin, there may be mentioned a homopolymer of ethylene, a homopolymer of a C2-C6 *α*-olefin such as propylene, butene-1, pentene-1, hexene-1, 4-methylpentene-1 or the like, a copolymer of ethylene with a C3-C6 *α*-olefin, a copolymer of two or more kinds of C2-C6 *α*-olefins, an inonomer resin, or the like.

The copolymer may be a random copolymer or a block copolymer.

As the polyolefin resin, a mixture of various polyolefin resins such as a polyethylenic resin, a polypropylenic resin and the like may be used.

Of polyolefin resins, a polypropylenic resin made mainly of propylene is excellent in stiffness and impact strength, solvent resistance, heat resistance, and thus particularly preferably used for the composite resin composition of the present invention.

As the polypropylenic resin, there may specifically be mentioned a propylene homopolymer, a propylene-ethylene copolymer, a propylene-butene copolymer, a block copolymer or random copolymer made of a copolymer of propylene with ethylene and/or the above-mentioned *α*-olefin, a modified polypropylene having polar functional groups, or the like.

Of the olefinic resins, polyethylenic resins (PE) such as high density polyethylenes (HDPE), low density polyethylenes (LDPE) and bio-polyethylenes; polypropylenic resins(PP); vinyl chloride resins; styrene resins; (meth)acrylic resins; vinyl ether resins; and the like may be used in view of such advantages that incorporation of them as a component of a resin composition permits the resin composition to exhibit improved reinforcing effect and that they have flexibility and are inexpensive.

Further, as the component (B), polymer alloys may be used which are obtained by incorporating rubbers listed below into the above-listed polyolefinic resins.

As such rubbers, there may specifically be mentioned ethylene-propylene-a non-conjugated diene copolymer rubbers, ethylene-butene-1 copolymer rubbers, ethylene-hexene copolymer rubbers, ethylene-octene copolymer rubbers, polybutadienes, styrene-butadiene block copolymer rubbers, styrene-butadiene copolymer rubbers, partially hydrogenated styrene-butadiene-styrene block copolymer rubbers, styrene-isoprene block copolymer rubbers, partially hydrogenated styrene-isoprene block copolymer rubbers, polyurethane rubbers, styrene-grafted ethylene-propylene-a non-conjugated diene copolymer rubbers, styrene-grafted ethylene-propylene copolymer rubbers, styrene/acrylonitrile-grafted ethylene-propylene-a non-conjugated diene copolymer rubbers, styrene/acrylonitrile-grafted ethylene-propylene copolymer rubbers, and the like.

The polymer alloy preferably has a rubber content of 50 % by weight or less from the standpoint that the rubber is incorporated into the polyolefinic resin in order to add new properties to the properties inherent in the polyolefinic resin. (The description on the polymer alloy is based on the disclosure of Japanese Unexamined Patent Publication No. 2007-39592.)

### [(C) Terpene Phenolic Compound]

Generally, terpene phenolic compounds mean products obtained by copolymerizing a monomeric terpene with a phenolic compound in an organic solvent in the presence of Friedel-Clafts type catalyst. However, the terpene phenolic compounds used in the present invention are not restricted to such terpene phenolic compounds and include, for example, products obtained by copolymerizing a monomeric terpene, a phenolic compound and a monomeric aromatic compound. Further, the terpene phenolic compounds may be hydrogenated terpene phenolic compounds obtained by hydrogenating the above described terpene phenolic compounds.

As the terpene monomer, there may be mentioned C5-hemiterpenes such as isoprene; C10-monoterpenes such as *α*-pinene, β-pinene, dipentene, d-limonene, myrcene, allo-ocimene, ocimene, *α*-phellandrene, *α*-terpinene, *γ*-terpinene, terpinolene, 1, 8-cineol, 1, 4-cineol, *α*-terpineol, *β*-terpineol, *γ*-terpineol, sabinene, para-menthadienes, carenes; C15-sesquiterpenes such as caryophyllene, longifolene; C20-diterpenes; and the like. However, the terpene monomer is not restricted to these compounds. Of these compounds, *α*-pinene, β-pinene, dipentene and d-limonene are particularly preferably used. As the aromatic monomer, styrene, *α*-methylstyrene, vinyltoluene, isopropenyltoluene, and the like may be mentioned. However, the aromatic monomer is not restricted to these compounds. As the phenolic compound, phenol, cresol, xylenol, bisphenol A, and the like may be mentioned. However, the phenolic compound is not restricted to these compounds.

The terpenic resins are put on the market, for example, by Yasuhara Chemical Co., Ltd. under the trade names of "YS Polystar" (terpene phenolic resin) and "Mighty Ace" (terpene phenolic resin) and thus easily available.

If the terpene phenolic compound is incorporated in an amount less than 0.2 part by weight, no substantial improvement is obtained in dispersibility of cellulose nanofibers. On the other hand, if the terpene phenolic compound is incorporated in an amount more than 30 parts by weight, tensile elongation of a molded product is considerably lowered and a problem is caused in a surface of a molded product due to bleeding or the like. The terpene phenolic compound is incorporated in an amount of, preferably 0.5 part by weight-20 parts by weight, more preferably 1 part by weight-15 parts by weight. As the terpene phenolic compound, those having a hydroxyl value of 50 - 150 may be used advantageously because of having high cellulose nanofiber-dispersing effect.

### [Additives]

To the polyolefin resin composition of the present invention, another resin or other resins and/or an additive or additives may be added at the time of blending or molding so long as the addition causes no substantial impairment of physical properties of the polyolefin resin composition. As the additive, there may be mentioned a compatibilizer, a surfactant, a starch, a polysaccharide, gelatin, glue, a natural protein, tannin, a zeolite, a ceramic, a metal powder, a pigment, a dye, a reinforcing agent, a filler, a heat-resistant agent, an oxidation inhibitor, a weathering agent, a lubricant, a parting agent, a nucleating agent, a colorant, a perfume, a leveling agent, a plasticizer, a flowability improving agent, a conductive agent, an antistatic agent, a ultraviolet absorber, a ultraviolet dispersant, a deodorant, and the like.

The additives may be contained in any amount so long as no substantial impairment is caused in the effect of the present invention. However, the additives are preferably contained in an amount in total of, for example, about 10 % by weight or less, more preferably about 5 % by weight or less of the resin composition.

### [Polyolefin Resin Composition]

As a method for preparing the polyolefin resin composition of the present invention, those comprising melt-kneading the components in a heretofore known manner may be mentioned.

For example, those comprising dispersively mixing the components in a high speed mixer typified by a tumbling mixer, a Henschel mixer, a ribbon blender, or a super mixer, followed by melt-kneading the mixture by means of an extruder, a Banbury mixer, a roll or the like, may appropriately be selected.

There is no particular restriction as to a molding method of the polyolefin resin composition of the present invention. As the molding method, injection molding, injection compression molding, extrusion molding, blow molding and the like may be employed.

Molded products derived from the polyolefin resin composition of the present invention may suitably be used in the fields of office automation appliances, information and communication equipment, automobile parts, building materials, and the like.

The present invention provides a resin composition which, by virtue of incorporation of cellulose nanofibers as a biomass material into a polyolefin resin, is capable of yielding a molded product that is less susceptible to lowering of impact strength, and that exhibits a high stiffness and yet has a low specific gravity, i.e., that has an increased specific stiffness (MPa), and that has decreased surface roughness and thus an excellent appearance. Further, since a terpenic compound is incorporated in the resin composition, dispersibility of the cellulose nanofibers in the resin composition is thereby improved.

The polyolefin resin composition of the present invention has such characteristics that molded products made of specific examples of the polyolefin resin composition in the following Examples substantially satisfied the following criteria with respect to tensile modulus of elasticity (MPa) and tensile elongation (%) in the property-evaluation carried out in Examples, and that the specific examples of the polyolefin resin composition yielded molded products having an excellent appearance.

The tensile modulus or elasticity (MPa) is preferably 1500 MPa or more, more preferably 1700 MPa or more, and particularly preferably 2000 MPa, from the viewpoint of a balance between lightness and stiffness.

The tensile elongation (%) is preferably 2% or more, more preferably 5% or more, and particularly preferably 9% or more, from the viewpoint of the balance between lightness and stiffness. When the tensile elongation (%) is 2% or more, a molded product meets mechanical strengths required for a housing of an ordinary electrical and electronic equipment. If the tensile elongation (%) is less than 2%, there is undesired possibility of breakage of a molded product due to dropping, impact or the like.

### EXAMPLES

The present invention will be described further specifically with reference to the following Examples. However, the present invention is by no means restricted to these Examples.

Each of components and property-evaluation methods which were used in Examples and Comparative Examples are as follows.
Component (A): cellulose nanofibers
cellulose nanofibers: trade name (manufactured by Chuetsu Pulp & Paper Co., Ltd., average thickness: 36.5 nm, *α*-cellulose content: 85 % by weight)
Component (B): polyolefin resin
polyolefin resin: polypropylene (E-105 GM manufactured by Prime Polymer Co., Ltd.)
Component (C): terpenic compound
terpene phenol 1 (YS Polystar T130 manufactured by Yasuhara Chemical Co., Ltd., hydroxyl value: 60)
terpene phenol 2 (YS Polystar G125 manufactured by Yasuhara Chemical Co., Ltd., hydroxyl value: 140)
terpene phenol 3 (YS Polystar K125 manufactured by Yasuhara Chemical Co., Ltd., hydroxyl value: 160)
terpene phenol 4 (YS Polystar U115 manufactured by Yasuhara Chemical Co., Ltd., hydroxyl value: 40)
Components (C'): dispersants in Comparative Examples
terpene (Clearon P115 manufactured by Yasuhara Chemical Co., Ltd., hydroxyl value: 0)
neutral nonionic agent
neutral anion sizing agent
alicyclic saturated hydrocarbon resin
rosin esterification agent
acidic anion sizing agent
fluorinated ethylene

### [Property-Evaluating Method]

### (1) Tensile Modulus of Elasticity (MPa)

A No.3 dumbbell specimen was subjected to conditioning at 23°C in 50% relative humidity (RH) atmosphere for 72 hours, and then tensile modulus of elasticity (MPa) was measured at an elastic stress rate of 50 mm/min by means of a tensile testing machine (STROGRAPH manufactured by Toyo Seiki Seisaku-Sho, Ltd.).

### (2) Tensile Elongation (%)

Tensile elongation (%) was measured in substantially the same manner as in the tensile modulus of elasticity test (MPa).

### (3) Appearance of Molded Product

A 80x40x3 mm test piece was molded, and surface roughness of the test piece was evaluated by visual observation.

**TABLE 1**

| The results of the evaluation | | | | | | |
|---|---|---|---|---|---|---|
| | Ex.1 | Ex.2 | Ex.3 | Ex.4 | Ex.5 | Ex.6 |
| Polypropylene (E-105GM) | 95 | 90 | 85 | 85 | 85 | 85 |
| cellulose nanofiber (dry weight) | 25 | 5 | 10 | 10 | 10 | 10 |
| terpene phenol 1 | 25 | 5 | 5 | | | |
| terpene phenol 2 | | | | 5 | | |
| terpene phenol 3 | | | | | 5 | |
| terpene phenol 4 | | | | | | 5 |
| tensile modulus of elasticity (MPa) | 1720 | 1980 | 2260 | 2270 | 2400 | 2150 |
| tensile elongation (%) | 150 | 17 | 5.5 | 4.7 | 2.1 | 9.8 |
| specific gravity | 0.92 | 0.94 | 0.96 | 0.96 | 0.96 | 0.96 |
| appearance of molded product | Good | Good | Good | Good | fine grains were observed | fine grains were observed |

| | Comp.Ex.1 | Comp.Ex.2 | Comp.Ex.3 | Comp.Ex.4 | Comp.Ex.5 | |
|---|---|---|---|---|---|---|
| polypropylene (E-105GM) | 100 | 85 | 85 | 85 | 85 | |
| cellulose nanofiber (dry weight | | 10 | 10 | 10 | 10 | |
| Terpene | | | 5 | | | |
| neutral nonionic agent | | | | 5 | | |
| neutral anion sizing agent | | | | | 5 | |
| tensile modulus of elasticity (MPa) | 1010 | 2030 | 2150 | 1232 | 1420 | |
| tensile elongation (%) | 830 | 1.8 | 1.6 | 656 | 537 | |
| specific gravity | 0.91 | 0.96 | 0.96 | 0.96 | 0.96 | |
| appearance of molded product | Good | coarse grains were observed | coarse grains were observed | coarse grains were observed | coarse grains were observed | |

| | Comp.Ex.6 | Comp.Ex.7 | Comp.Ex.8 | Comp.Ex.9 | Comp.Ex.10 | |
|---|---|---|---|---|---|---|
| polypropylene (E-105GM) | 85 | 85 | 85 | 85 | 30 | |
| cellulose nanofiber (dry weight) | 10 | 10 | 10 | 10 | 65 | |
| alicyclic saturated hydrocarbon resin | 5 | | | | | |
| rosin esterification agent | | 5 | | | | |
| acidic anion sizing agent | | | 5 | | | |
| fluorinated ethylene | | | | 5 | | |
| tensile modulus of elasticity (MPa) | 1270 | 1321 | 1504 | 1566 | ----- | |
| tensile elongation (%) | 588 | 322 | 615 | 609 | ----- | |
| specific gravity | 0.96 | 0.96 | 0.96 | 0.96 | ----- | |
| appearance of molded product | grains were observed | coarse grains were observed | grains were observed | coarse grains were observed | not moldable | |

### Examples 1-6 and Comparative Examples 1-7

The components were blended in proportions shown in Table 1 and the resulting composition was supplied into an extruder (TEM 35 manufactured by Toshiba Machine Co., Ltd.), and melted and kneaded at 210°C to pelletize the composition.

The thus obtained pellets were dried at 80 °C for 12 hours, and then injection-molded by means of an injection molding machine (IS100N model manufactured by Toshiba Machine Co., Ltd.) under such conditions that cylinder temperature and mold temperature were 210°C and 50°C, respectively, to prepare test pieces. Using the prepared test pieces, properties of the test pieces were evaluated through the tests. The results are shown in Table 1.

As is obvious from Table 1, tensile modulus of elasticity (MPa), tensile elongation (%), and appearance of the molded product are excellent and a molded product has a specific gravity less than 1.0 in every Example.

Further, from comparison between Examples 3-6 and Comparative Examples 2-9, it is understood that the incorporation of (C) the terpene phenolic compound improves, in particular, appearance of the molded product.

### Industrial Applicability

The present invention provides a polyolefin resin composition which has excellent environmental characteristics by virtue of use of a biomass material, and which is capable of yielding a molded product that is less susceptible to lowering of impact strength and that has a low specific gravity and yet exhibits a high stiffness, i.e., has a high specific stiffness and that has an excellent appearance. The polyolefin resin composition of the present invention may suitably be used in the fields of, for example, office automation appliances, information and communication equipment, automobile parts, building materials, and the like.

## Claims

1. A polyolefin resin composition comprising: 100 parts by weight of a resin mixture of (A) 1-60 % by weight of cellulose nanofibers obtained by fibrillating polysaccharide with a high pressure water or aqueous jet and having an average thickness of 10-200 nm and (B) 99-40 % by weight of a polyolefin resin, and (C) 0.2-30 parts by weight of a terpene phenolic compound.

2. The polyolefin resin composition according to claim 1, wherein (A) the polysaccharide is pulp having an *α*-cellulose content of 60-99 % by weight.

3. The polyolefin resin composition according to claim 1 or 2, wherein (A) the cellulose nanofibers have been prepared by causing a high-pressure water or aqueous jet of about 50-400 MPa to collide against a 0.5-10 % by weight aqueous slurry of the polysaccharide.

4. The polyolefin resin composition according to any one of claims 1 to 3, wherein (A) the aqueous dispersion of the cellulose nanofibers has a solid content concentration of 20% or more.

5. The polyolefin resin composition according to any one of claims 1 to 4, wherein (C) the terpenic compound is a terpene phenolic compound having a hydroxyl value of 50-150.

## Patentansprüche

1. Eine Polyolefinharzzusammensetzung, beinhaltend: 100 Gewichtsteile einer Harzmischung aus (A) zu 1-60 Gew.-% Cellulosenanofasern, die durch Fibrillieren von Polysaccharid mit einem Wasser- oder wässrigen Strahl unter Hochdruck erhalten werden und eine durchschnittliche Dicke von 10-200 nm aufweisen, und (B) zu 99-40 Gew.-% einem Polyolefinharz und (C) 0,2-30 Gewichtsteilen einer Terpenphenolverbindung.

2. Polyolefinharzzusammensetzung gemäß Anspruch 1, wobei (A) das Polysaccharid Pulpe mit einem α-Cellulosegehalt von 60-99 Gew.-% ist.

3. Polyolefinharzzusammensetzung gemäß Anspruch 1 oder 2, wobei (A) die Cellulosenanofasern hergestellt wurden, indem bewirkt wurde, dass ein Wasser- oder wässrigen Strahl unter Hochdruck von etwa 50-400 MPa mit einer 0,5-10 Gew.-%-igen wässrigen Aufschlämmung des Polysaccharids kollidierte.

4. Polyolefinharzzusammensetzung gemäß einem der Ansprüche 1 bis 3, wobei (A) die wässrige Dispersion der Cellulosenanofasern eine Feststoffgehaltkonzentration von 20 % oder mehr aufweist.

5. Polyolefinharzzusammensetzung gemäß einem der Ansprüche 1 bis 4, wobei (C) die Terpenverbindung eine Terpenphenolverbindung mit einer Hydroxylzahl von 50-150 ist.

## Revendications

1. Une composition de résine de polyoléfine comprenant : 100 parties en poids d'un mélange résinique de (A) 1 à 60 % en poids de nanofibres de cellulose obtenues par fibrillation de polysaccharide à l'aide d'une eau ou d'un jet aqueux à haute pression et présentant une épaisseur moyenne de 10 à 200 nm et (B) de 99 à 40 % en poids d'une résine de polyoléfine, et (C) de 0,2 à 30 parties en poids d'un composé de terpène phénolique.

2. La composition de résine de polyoléfine selon la revendication 1, dans laquelle (A) le polysaccharide est une pâte présentant une teneur en α-cellulose de 60 à 99 % en poids.

3. La composition de résine de polyoléfine selon la revendication 1 ou la revendication 2, dans laquelle (A) les nanofibres de cellulose ont été préparées en provoquant une collision entre une eau ou un jet aqueux à haute pression d'environ 50 à 400 MPa et une boue aqueuse du polysaccharide de 0,5 à 10 % en poids.

4. La composition de résine de polyoléfine selon l'une quelconque des revendications 1 à 3, dans laquelle (A) la dispersion aqueuse des nanofibres de cellulose présente une teneur en matières solides de 20 % ou plus.

5. La composition de résine de polyoléfine selon l'une quelconque des revendications 1 à 4, dans laquelle (C) le composé de terpène est un composé de terpène phénolique présentant un indice d'hydroxyle de 50 à 150.
